# FASCICULE DE BREVET EUROPEEN

(11) **EP 0 698 851 B1**
(45) Date de publication et mention de la délivrance du brevet: **14.05.1997**
(21) Numéro de dépôt: 95401720.8
(22) Date de dépôt: 19.07.1995
(51) Int. Cl.: G06F 13/38, G06F 3/08

(54) **Système lecteur de carte à mémoire ou à puce**
Speicher-/Chipkartenlesersystem
Memory card or chip card reader system

(30) Priorité: 28.07.1994 FR 9409381
(43) Date de publication de la demande: 28.02.1996
(73) Titulaire: SGS-THOMSON MICROELECTRONICS S.A., 94250 Gentilly (FR)
(72) Inventeur: Farges, Michel, Cabinet Ballot Schmit, F-75116 Paris (FR)
(74) Mandataire: Schmit, Christian Norbert Marie

(56) Documents cités:
- EP-A- 0 314 530
- WO-A-90/12357

## Description

L'invention concerne un système lecteur de carte à mémoire ou à puce, et plus particulièrement un lecteur de carte connectable sur un micro-ordinateur. Un tel lecteur est applicable à la lecture, aussi bien de cartes du type carte à mémoire synchrone, par exemple aussi des cartes téléphones, que de cartes dites cartes à puces de type carte bancaire.

Les nombreux lecteurs existants ont en commun un fonctionnement assuré par un micro-processeur qui leur est propre et qui gère l'échantillonnage d'une ligne d'entrée/sortie de la carte et le protocole de transmission associé. De plus, le microprocesseur du lecteur assure également le dialogue avec le micro-ordinateur. Chaque lecteur possède donc un microprocesseur dont la conception est plus ou moins évolué et qui influe considérablement sur le coût du lecteur.

Les cartes acceptées par chaque lecteur et les protocoles de transmission vers le micro-ordinateur sont fixés dans le microprocesseur du lecteur. Celui-ci détecte s'il peut traiter la carte qui lui est présentée et en liaison avec le micro-ordinateur, décide du protocole de transmission.

La connexion d'un lecteur de cartes au micro-ordinateur est réalisée à l'aide d'un connecteur ou port qui est réservé exclusivement à la connexion du lecteur. Ce port peut être prévu pour une transmission série ou parallèle. Cela nécessite donc sur chaque micro-ordinateur un port spécifique pour le lecteur de carte ce qui est un inconvénient car on a intérêt pour une question de coût et pour une question de souplesse d'utilisation à réduire le nombre de ports d'accès au micro-ordinateur.

L'objet de l'invention est de réaliser un lecteur de carte connectable sur un port parallèle du micro-ordinateur, généralement utilisé pour l'imprimante. L'imprimante partagera alors le même port que le lecteur de carte, ce qui ne complique pas la connectique du micro-ordinateur. Lié à ce mode de connexion, l'invention fournit un lecteur simplifié capable de fonctionner en coopération avec le micro-ordinateur.

Cependant, une telle conception se heurte à la compatibilité du lecteur avec le micro-ordinateur auquel il est connecté ainsi qu'avec les périphériques (tels qu'imprimante) connectés au micro-ordinateur. De plus, un tel lecteur connecté au même port qu'un autre périphérique ne doit pas perturber le fonctionnement de ce périphérique ni être perturbé par ce périphérique.

Une application intéressante du lecteur de l'invention réside dans l'utilisation de cartes à mémoire ou de cartes à puces comme clé de protection de logiciel. En effet, la grande diversité de cartes à mémoires et de cartes à puces et leur souplesse d'utilisation en font des produits particulièrement adaptés au contrôle d'accès de logiciels. Voici quelques exemples de services facilement réalisables avec une carte à mémoire (ou une carte à puce) utilisée dans un lecteur selon l'invention :
- gestion de date limite de validité pour un logiciel en location ou en démonstration ;
- pré-paiement d'unité de temps d'utilisation effective du logiciel ;
- validation de fonctions selon l'utilisateur, c'est à dire, autorisation à un utilisateur de faire appel à des fonctions déterminées d'un logiciel en exploitation dans le micro-ordinateur ;
- remplacement de plusieurs clés pour logiciel par une carte unique.

Une autre caractéristique du lecteur selon l'invention réside dans son architecture. En effet, ce lecteur peut ne pas possèder de microprocesseur. Le logiciel du micro-ordinateur (PC) pilote alors directement le lecteur. Par conséquent, les produits et protocoles supportés dépendent uniquement du logiciel du micro-ordinateur

De cette organisation découle un avantage appréciable qui réside dans le caractère évolutif du système et dans sa souplesse d'utilisation et d'adaptation. Par exemple, les mises à jour du logiciel du micro-ordinateur se réalisent par chargement de disquettes, alors que dans les lecteurs connus, un changement de produit ou de protocole impose un changement de la mémoire programme du micro-processeur du lecteur. Certains lecteurs sont téléchargeables mais sont d'un coût élevé et difficilement applicables pour des applications courantes.

L'invention concerne donc un système lecteur de carte à mémoire (ou de carte à puce) comprenant au moins un micro-ordinateur équipé d'au moins un connecteur d'entrée/sortie du micro-ordinateur ainsi qu'un lecteur de carte. Ce système comprend notamment une liaison de connexion permettant de connecter en dérivation, sur le même connecteur d'entrée/sortie du micro-ordinateur, le lecteur de carte, ainsi qu'un autre dispositif périphérique. Cette liaison permet de transmettre au lecteur au moins un signal de validation de fonctionnement du lecteur, le lecteur possédant un circuit d'identification de ce signal de validation.

Une telle conception d'architecture de transmission est devenue actuellement possible en raison de l'évolution des micro-ordinateurs. Les capacités de traitement ont maintenant suffisamment évolué et notamment les vitesses de traitement permettent au micro-ordinateur de prendre en charge le travail réalisé auparavant par le microprocesseur du lecteur. A titre d'exemple un processeur du type 8086 travaillait en 8 bits avec une fréquence d'horloge de 4 à 5 MHz.

Le processeur de type 286 avec des registres de 16 bits travaille à une fréquence de 16 MHz. Actuellement les processeurs de type 386 et 486 travaillent avec des registres de 32 bits et 64 bits respectivement et à des vitesses correspondant respectivement à 33 MHz et 66 MHz. De plus, certains nouveaux processeurs intègrent des perfectionnements d'architecture tels que des mémoires ultra-rapides appelées "mémoires caches" qui permettent de réduire les appels mémoires et qui accroissent les puissances de traitement du processeur.

Dans ces conditions, un micro-ordinateur est devenu capable de prendre en charge le travail de gestion du lecteur de carte. Il va notamment pouvoir gérer les protocoles de transmission vers le lecteur. Il résulte de cela que les modifications de protocole seront faciles à réaliser puisqu'il sera possible de les modifier dans le micro-ordinateur.

Si le lecteur de carte ne possède pas de microprocesseur, le micro-ordinateur est convenablement programmé pour échanger des informations avec le lecteur selon un protocole adapté à ce lecteur.

Selon cette conception, le micro-ordinateur s'avère suffisamment rapide pour échantillonner la ligne d'entrée/sortie de la carte. La vitesse de transmission n'est limitée que par la rapidité du micro-ordinateur.

Toutefois, si le micro-ordinateur peut sans difficulté traiter une information à chaque temps bit, il lui est impossible de produire la base de temps nécessaire avec une précision suffisante. Par conséquent, pour la réception, le lecteur est chargé d'échantillonner de manière rigoureuse la ligne d'entrée/sortie, pour tenir à disposition du logiciel l'information pendant toute la durée d'un temps bit. La transmission fonctionne selon un principe similaire ; les bits transmis par le logiciel sont resynchronisés par le lecteur.

Les différents objets et caractéristiques de l'invention apparaîtront plus clairement dans la description qui va suivre et dans les figures annexées qui représentent :
- les figures 1a et 1b des exemples simplifiés de réalisation du système de l'invention ;
- la figure 2, un exemple de réalisation simplifiée du lecteur selon l'invention ;
- la figure 3,des signaux de données et leurs signaux d'échantillonnages transmis ;
- les figures 4a à 4b, un exemple de réalisation détaillé du lecteur selon l'invention.

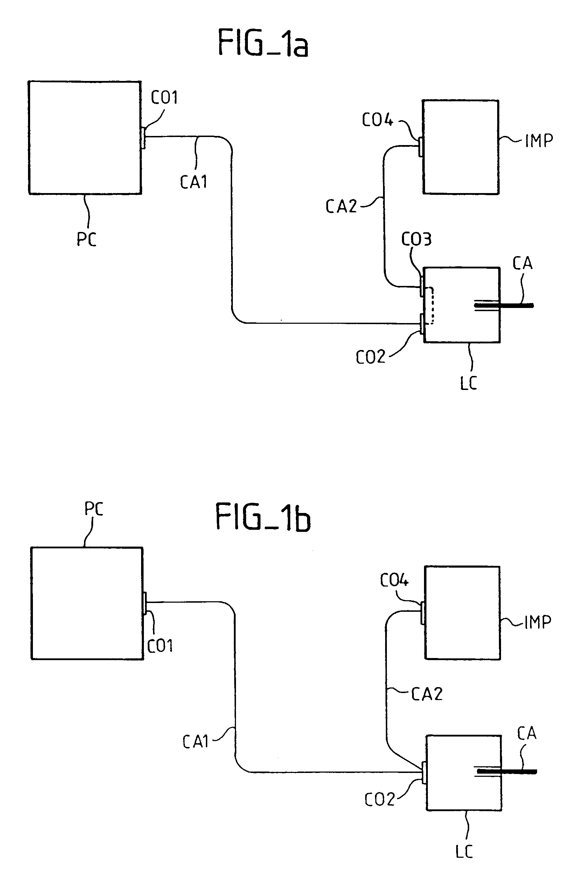

En se reportant aux figures 1a et 1b, on va tout d'abord décrire un exemple général de réalisation du système selon l'invention.

Sur ces figures on trouve un micro-ordinateur PC (tel qu'un PC) , un lecteur de carte LC et un autre périphérique informatique tel qu'une imprimante IMP.

Le lecteur de carte LC peut être à même de lire des cartes CA du type carte à mémoires ou du type carte à puce. Selon l'invention, ces cartes peuvent être de modèles et de marques variés.

Particulièrement, selon l'invention le micro-ordinateur PC ne comporte qu'un seul connecteur ou port CO1 pour la connexion du lecteur de cartes LC et de l'imprimante IMP.

Selon la figure 1a, le lecteur de carte possède un port CO2 pour la connexion du lecteur au port CO1 du micro-ordinateur à l'aide du câble CA1 et un port CO3 pour la connexion du lecteur au port CO4 de l'imprimante à l'aide du câble CA2. Les ports CO2 et CO3 sont interconnectés dans le lecteur.

Selon la figure 1b, le port CO2 du lecteur est connecté au port CO1 du micro-ordinateur mais le câble CA2 est connecté en dérivation sur le câble CA1 de telle façon que le lecteur n'a qu'un seul port CO2 auquel peut être connecté le port CO4 de l'imprimante IMP.

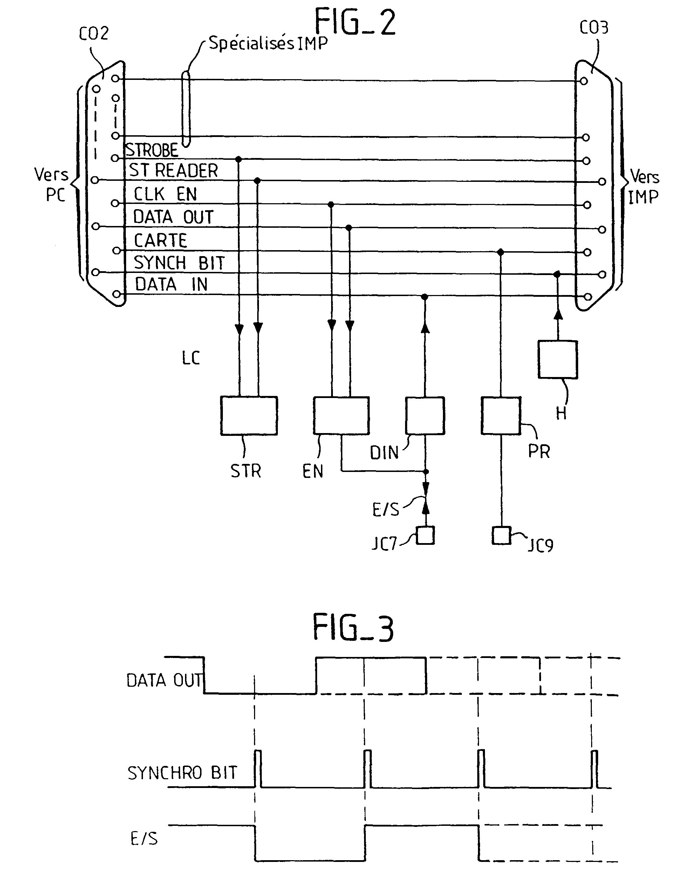

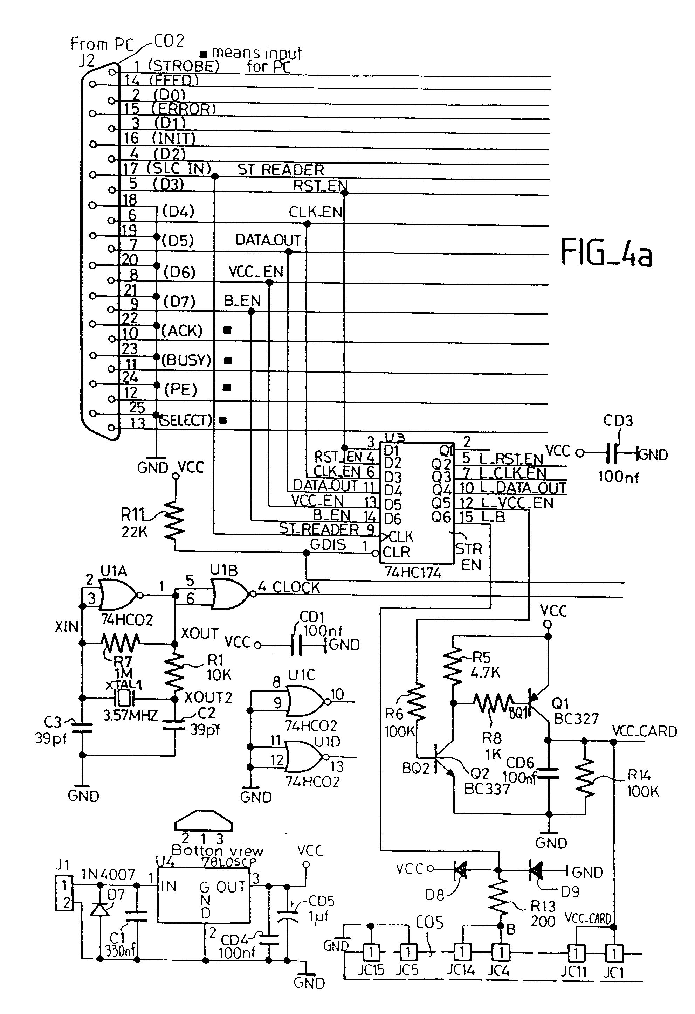

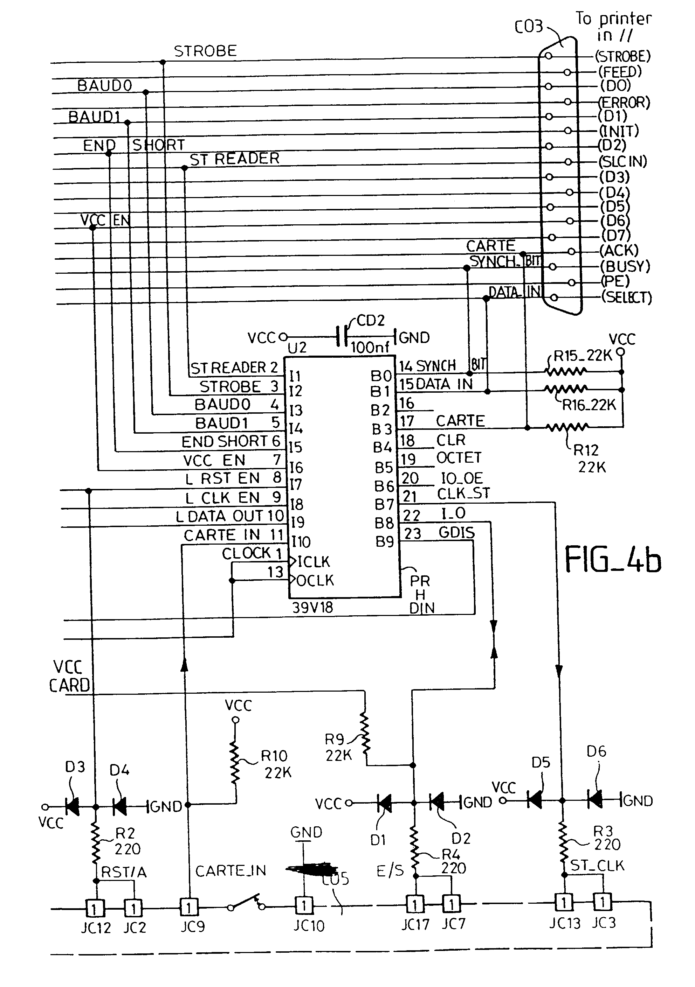

Sur la figure 2, on a représenté un exemple de réalisation simplifié du lecteur de l'invention dans lequel on a indiqué les fils et signaux nécessaires aux communications micro-ordinateur/lecteur de cartes. Les figures 4a et 4b en montrent une réalisation pratique détaillée avec notamment les significations normalisées des signaux attachés à un connecteur de type parallèle normalisé.

A la partie supérieure de cette figure 2 on trouve les ports CO2 et CO3 permettant la connexion du lecteur respectivement au micro-ordinateur PC et à un périphérique tel que l'imprimante IMP.

Des dispositifs de connexions tels que JC7 et JC9 permettent de connecter une carte au lecteur. En cas de présence d'une carte dans le lecteur, un circuit PR détecte cette présence et fournit un signal de présence sur le fil CARTE vers le micro-ordinateur PC.

Le lecteur LC possède un circuit STR permettant d'identifier un signal reçu du micro-ordinateur et lui indiquant qu'il va échanger des informations avec le micro-ordinateur.

Le micro-ordinateur fournit un signal sur un fil dit ST READER ; ce signal est indentifié par le circuit STR. Eventuellement, le circuit STR vérifie l'absence de signal un fil dit STROBE. En effet, un signal STROBE permet d'initier une communication du micro-ordinateur PC vers l'imprimante IMP. Le lecteur LC est alors activé en mode réception.

Dans le cas de transmission d'informations du micro-ordinateur PC vers le lecteur LC, le micro-ordinateur PC transmet des informations sur un fil dit DATA OUT.

Après le début de chaque bit d'information, un circuit H d'horloge fournit sur un fil dit SYNCH BIT, un signal d'horloge dont le flanc avant est situé après le flanc avant du bit, par exemple au milieu de chaque bit. Ce signal SYNCH BIT est utilisé par le micro-ordinateur pour échantillonner ou faire échantillonner les bits reçus sur les fils E/S ou DATA-OUT.

Pour chaque bit transmis le lecteur LC, à l'aide d'un circuit d'enregistrement EN, échantillonne le bit d'information DATA OUT avec le signal de validation SYNCH BIT. Cela permet au lecteur de prendre (stocker dans un registre) la valeur de chaque bit en s'affranchissant des parasites et des modulations intempestives qui affectent le début (flanc montant) de chaque bit. Le circuit EN retransmet ensuite éventuellement les informations sur la connexion JC7 vers la carte. Le circuit EN comporte par exemple un monostable qui produit un retard calibré. Ce monostable comporte de préférence un compteur pour compter la durée de retard. Le circuit EN et le circuit STR sont de préférence réalisés à l'aide d'un circuit de type 74HC174.

Dans le cas de transmission d'information dans le sens lecteur LC vers le micro-ordinateur PC, un circuit DIN ayant reçu des informations de la carte par la connexion E/S reliée à la borne JC7, les présente sur le fil DATA IN. Le circuit AR, le circuit H et le circuit DIN sont de préférence réalisés à l'aide d'un circuit intégré de type 39V18.

Sur la figure 3, on a représenté un exemple de bits transmis DATA OUT. Décalé par rapport aux flancs avant des bits, on a représenté le signal de validation SYNCH BIT, et la donnée correspondante transmise à la carte sur la connexion E/S.

Le lecteur de cartes ainsi décrit ne possède pas de microprocesseur à la différence des lecteurs de cartes existants. Le lecteur de cartes n'a donc plus de fonctions intelligentes. Les fonctions telles que les fonctions de transformation de protocoles, par exemple transformation de protocoles d'octet en protocoles de groupes d'octets, se fait dans le micro-ordinateur PC. De même l'adaptation au type de carte se fait dans le micro-ordinateur.

Le système de lecteur de cartes est donc simplifié en ce qui concerne le lecteur mais fournit une souplesse d'utilisation en reportant sur le micro-ordinateur les possibilités de modifications de l'exploitation.

De plus, le système de l'invention assure une sécurité des transmissions bien que le lecteur n'ait plus d'autonomie de fonctionnement.

Les figures 4a et 4b représentent un exemple détaillé de réalisation d'un lecteur de cartes.

Les figures 4a et 4b sont assemblées en correspondance graphique.

On retrouve sur ces figures les ports d'accès CO2 (vers le micro-ordinateur) et CO3 (vers l'imprimante).

En bas de ces figures se trouve le port CO5 pour la connexion d'une carte. On retrouve également certains fils décrit en relation avec la figure 2.

Les différents fils de connexion portent les noms des signaux qu'ils véhiculent. Les signaux ont les fonctions suivantes :
- STROBE =: signal de validation de données vers l'imprimante ;
- FEED =: signal de saut de page à destination de l'imprimante ;
- BAUD 0, BAUD 1 =: signaux pour l'imprimante ou l'initialisation du lecteur ;
- ERROR =: signal d'erreur pour l'imprimante ;
- END SHORT =: le signal END indique la fin d'un octet et le signal SHORT, un fonctionnement en mode synchrone, ou une donnée imprimante ;
- ST READER =: signal de validation de fonctionnement destiné au lecteur ou une donnée imprimante ;
- RST EN =: signal de réinitialisation ou de remise à zéro de la carte ou donnée imprimante ;
- CLK EN =: signal de validation d'horloge de la carte ou donnée imprimante ;
- DATA OUT =: signaux de données émis par le micro-ordinateur à destination du lecteur ;
- VCC EN =: signal de validation de l'alimentation électrique de la carte ou donnée imprimante ;
- CARTE (ou ACK) =: signal indiquant la présence d'une carte dans le lecteur de carte ; ou accusé de réception émis par l'imprimante ;
- SYNCH BIT =: signal d'horloge de validation émis par le lecteur à destination du microprocesseur ou indication d'imprimante occupée ;
- DATA IN =: signal représentant les informations transmises par le lecteur vers le micro-processeur, ou des indications d'imprimante connectée.

En ce qui concerne le port CO5 de connexion d'une carte, les différentes connexions, doublées pour satisfaire à différentes normes de connexion, ont les fonctions suivantes :
- JC5/JC15 =: fourniture d'une masse GND ;
- JC4/JC14 =: transmission du signal de contrôle dit B pour une carte à mémoire ou à puce ;
- JC9/JC10 =: la présence d'une carte a pour effet de provoquer l'ouverture du contact normalement fermé au repos et reliant les deux connexions JC9 et JC10. L'ouverture de ce contact signale la présence d'une carte ;
- JC7/JC17 =: transmission d'informations E/S dans les deux sens de transmission ;
- JC3/JC13 =: signal d'horloge de validation de bits de données transmises.

Le connecteur utilisé du micro-ordinateur étant un connecteur de type parallèle, on remarquera que dans l'invention les données utiles sont échangées selon un protocole série avec les fils DATA OUT et DATA IN.

## Revendications

1. Système lecteur de carte à mémoire ou à puce comprenant au moins un micro-ordinateur (PC) équipé d'au moins un connecteur d'entrée/sortie (CO1) de type parallèle, ainsi qu'un lecteur de carte (LC), caractérisé en ce qu'il comprend une liaison de connexion (CA1) permettant de connecter en dérivation, sur le même connecteur d'entrée/sortie (CO1), ce lecteur de carte (LC) ainsi qu'un autre dispositif périphérique (IMP), cette liaison permettant de transmettre au lecteur (LC) au moins un signal (ST READER) de validation de fonctionnement du lecteur, le lecteur possédant un circuit d'identification de ce signal de validation et un circuit détectant la présence dans le lecteur de la carte à mémoire ou à puce et transmettant au micro-ordinateur une information correspondante.

2. Système selon la revendication 1, caractérisé en ce que le lecteur ne possède pas de microprocesseur, le micro-ordinateur étant convenablement programmé pour échanger des informations avec le lecteur selon un protocole adapté à ce lecteur.

3. Système selon la revendication 1, caractérisé en ce que le lecteur possède un premier connecteur (CO2) pour sa connexion au micro-ordinateur et un deuxième connecteur (CO3) pour la connexion d'un autre dispositif périphérique (IMP), les deux connecteurs (CO2 et CO3) étant interconnectés dans le lecteur.

4. Système selon la revendication 1, caractérisé en ce que le lecteur (LC) transmet, après le début de transmission de chaque bit d'information (DATA OUT) vers le lecteur, un signal de validation (SYNCH-BIT).

5. Système selon la revendication 1, caractérisé en ce que le lecteur (LC) comporte un circuit pour élaborer, après le début de transmission de chaque bit d'information (DATA IN) vers le micro-ordinateur (PC), un signal de validation (SYNCH BIT), le micro-ordinateur détectant ce signal de validation et prenant en compte la valeur de chaque bit d'information à la réception de ce signal de validation.

## Patentansprüche

1. Lesesystem für eine Speicher- oder Chip-Karte mit wenigstens einem Mikrorechner (PC), ausgestattet mit mindestens einem Eingangs-/Ausgangs-Verbinder (CO1) vom parallelen Typ sowie einem Kartenlesegerät (LC), dadurch gekennzeichnet, daß es einen Verbindungsanschluß (CA1) umfaßt, welcher eine Nebenschlußverbindung über denselben Eingangs-/Ausgangs-Verbinder (CO1), das Kartenlesegerät (LC) sowie eine andere Nebenvorrichtung (IMP) ermöglicht, wobei diese Verbindung die Übertragung wenigstens eines Signals (ST READER) zur Bestätigung der Funktion des Lesegeräts an das Lesegerät (LC) ermöglicht, das Lesegerät einen Identifizierungsschaltkreis für dieses Bestätigungssignal und einen Schaltkreis umfaßt, der die Anwesenheit im Lesegerät der Speicher- oder Chip-Karte erfaßt und eine entsprechende Information an den Mikrorechner überträgt.

2. System nach Anspruch 1, dadurch gekennzeichnet, daß das Lesegerät keinen Mikroprozessor umfaßt, der Mikrorechner geeignet programmiert ist, um Informationen mit dem Lesegerät gemäß einem an das Lesegerät angepaßten Protokoll auszutauschen.

3. System nach Anspruch 1, dadurch gekennzeichnet, daß das Lesegerät einen ersten Verbinder (CO2) für seine Verbindung mit dem Mikrorechner und einen zweiten Verbinder (CO3) für die Verbindung mit einer anderen Nebenvorrichtung (IMP) umfaßt, wobei die beiden Verbinder (CO2 und CO3) in dem Lesegerät zusammengeschaltet sind.

4. System nach Anspruch 1, dadurch gekennzeichnet, daß das Lesegerät (LC) nach Beginn der Übertragung jedes Informationsbits (DATA OUT) an das Lesegerät ein Bestätigungssignal (SYNCH-BIT) überträgt.

5. System nach Anspruch 1, dadurch gekennzeichnet, daß das Lesegerät (LC) einen Schaltkreis umfaßt, um nach dem Beginn der Übertragung jedes Informationsbits (DATA IN) an den Mikrorechner (PC) ein Bestätigungssignal (SYNCH BIT) zu erzeugen, wobei der Mikrorechner dieses Bestätigungssignal erfaßt und den Wert jedes Informationsbits beim Empfang dieses Bestätigungssignals berücksichtigt.

## Claims

1. System for reading a memory card or chip card comprising at least one microcomputer (PC) equipped with at least one input/output connector (CO1) of the parallel type, and a card reader (LC), characterised in that it comprises a connection link (CA1) making it possible to connect in a branch circuit, to the same input/output connector (CO1), this card reader (LC) and another peripheral device (IMP), this connection making it possible to transmit to the reader (LC) at least one signal (ST READER) validating the operation of the reader, the reader having a circuit for identifying this validation signal and a circuit detecting the presence in the reader of the memory card or chip card and transmitting corresponding information to the microcomputer.

2. System according to Claim 1, characterised in that the reader has no microprocessor, the microcomputer being suitably programmed in order to exchange information with the reader according to a protocol adapted to this reader.

3. System according to Claim 1, characterised in that the reader has a first connector (C02) for connecting it to the microcomputer and a second connector (C03) for connecting another peripheral device (IMP), the two connectors (C02 and C03) being interconnected in the reader.

4. System according to Claim 1, characterised in that the reader (LC) transmits, after the start of transmission of each information bit (DATA OUT) to the reader, a validation signal (SYNCH-BIT).

5. System according to Claim 1, characterised in that the reader (LC) has a circuit for generating, after the start of transmission of each information bit (DATA IN) to the microcomputer (PC), a validation signal (SYNCH BIT), the microcomputer detecting this validation signal and taking account of the value of each information bit on receipt of this validation signal.
